(19) Europäisches Patentamt / European Patent Office / Office européen des brevets

(11) **EP 2 921 057 A1**

(12) **EUROPEAN PATENT APPLICATION**
published in accordance with Art. 153(4) EPC

(43) Date of publication:
**23.09.2015 Bulletin 2015/39**

(51) Int Cl.:
**A23C 9/13** *(2006.01)*   **A23C 9/12** *(2006.01)*

(21) Application number: **13854721.1**

(86) International application number:
**PCT/KR2013/006882**

(22) Date of filing: **31.07.2013**

(87) International publication number:
**WO 2014/077488 (22.05.2014 Gazette 2014/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.11.2012 KR 20120128231**

(71) Applicant: **Samsung Fine Chemicals Co., Ltd.**
**Ulsan 680-090 (KR)**

(72) Inventors:
• **LEE, Hyun Woo**
  **Incheon 404-732 (KR)**
• **LEE, Eun Jung**
  **Seoul 137-796 (KR)**

(74) Representative: **Kador & Partner**
**Corneliusstraße 15**
**80469 München (DE)**

(54) **FERMENTED MILK COMPOSITION CONTAINING CELLULOSE ETHER AND PRODUCTION METHOD THEREFOR**

(57)    The present invention relates to a fermented milk composition containing cellulose ether and a production method thereof, the fermented milk composition includes cellulose ether as a stabilizer for preventing a whey separation phenomenon, and the production method of fermented milk includes manufacturing a fermented base; manufacturing a cellulose ether syrup; and adding the cellulose ether syrup to the fermented base to perform homogenization and cooling. As described above, in the fermented milk composition, it is possible to provide a fermented milk beverage securing stabilized phase stability and having reduced sourness by applying cellulose ether in a small amount instead of pectin as the stabilizer for preventing the whey separation phenomenon.

[FIG. 1]

**Description**

[Technical Field]

The present invention relates to a fermented milk composition to which cellulose ether is applied, and a production method thereof, and more particularly, to a fermented milk composition having the same or higher quality and securing phase stability by applying cellulose ether instead of pectin, carrageenan, and the like that are frequently applied to fermented milk, and a production method thereof.

[Background Art]

Fermented milk products are considered as food that is excellent in view of nutritional physiology, and it is known that in the case of the most representative fermented milk, regular utilization thereof is good for a long life and health.
A health improvement effect of fermented milk is based on a growth hindrance action of intestinal putrefactive bacteria caused by lactobacillus and metabolites formed during culturing of lactobacillus. A health improvement effect of lactobacillus fermented milk is based on scientific research relating to not only effects such as controlling of enterokinesia, suppression of pathogenic bacteria, promotion of digestion and absorption, and prevention of constipation and diarrhea, but also a nutritional physiological health improvement action or a disease suppression action by many researchers, starting from an eternal youth and long life theory of Mechnikov, and recently, a reduction action of blood cholesterol and an anticancer action of lactobacillus fermented milk have been reported.
Reviewing a process of manufacturing fermented milk, first, a fermented base including milk is sterilized and cooled, and if lactic acid bacteria called a starter are inoculated to be cultured for a predetermined time, organic acid such as lactic acid and acetic acid is generated due to proliferation of lactic acid bacteria, and thus a casein protein of milk is curdled to provide a flavor of fermented milk. In this case, a protein curd including casein and a whey including lactose and a whey protein, which is watersoluble and does not incur a precipitation phenomenon even at a low pH, are separated, and the separation is a very natural phenomenon when fermented milk is manufactured.
However, since this whey separation (whey off) is not good in terms of a fine appearance and a physical property difference between a hard curd and a clear liquid of an upper layer portion is large, which makes ingestion unfavorable, in order to uniformly mix a curd portion and a whey portion and suppress layer separation after fermentation, a stabilizer such as pectin capable of exhibiting a function even at a low pH well is mixed, and moreover, a process such as homogenization is performed to manufacture a product having an appearance capable of being accepted by a consumer.
Pectin generally used to manufacture fermented milk is manufactured by using the inside or byproducts such as peel of fruits having sourness, such as an apple, an orange, and a tangerine, and demethylation and hydrolysis are conducted by an action of an enzyme when fruits are peeled and processed to rapidly change physical properties, and thus, in order to suppress the action of the enzyme, generally, fruits are immediately dried and stored, and if necessary, fruits are subjected to extraction, purification, and confrication processes to produce pectin.
Alan Imeson et al. [Thickening and Gelling Agents For Food, 2nd edition, Blackie Academics & Professional, p 236] describes that pectin molecules have a property where the pectin molecules are generally stable even at a low pH but are easily decomposed in proportion to a temperature under a condition of a pH of 5 or higher, and describes that in this case, an esterified portion is very easily decomposed and thus properties such as a reduction in viscosity and a reduction in gel forming ability are exhibited.
Further, R. Hans Tromp et al. [Food Hydrocollids 18 (2004) 565-572] reports that when fermented milk is manufactured, only a level of about 20% or less of pectin added for phase stability directly acts with a protein and residual 80% of pectin forms a network in a solution. It is reported that because of this, only when an excessive amount of pectin is added, a portion thereof is adsorbed on the protein, and thus application of pectin in a predetermined amount or more is inevitable.
Since pectin, as described above, is weak to hydrolysis and an excessive amount of pectin is required for phase stability, considering that general fermented milk is a refrigerated acidic product having a short shelf life of about two weeks, general existing industries are in a situation where pectin may affect quality of the product and masking materials such as various kinds of flavors are inevitably applied due to a taste mismatch caused by sourness of pectin.
Accordingly, research on a material capable of supplementing pectin when fermented milk is manufactured is still being conducted.
Prior research relating to the application of cellulose ether when fermented milk is manufactured is as follows.
U.S. Registered Patent No. 4,427,701 and U.S. Registered Patent No. 5,605,712 describe application of hydroxypropylmethyl cellulose (HPMC) together with various stabilizers in manufacturing of frozen fermented milk. However, herein, hydroxypropylmethyl cellulose is a stabilizer in ice cream, frozen fermented milk, or the like, and performs a role of reducing a reduction in feeling of mouth due to growth of frozen crystals according to a change in temperature, preventing products from being easily melted to make a handling property of the products favorable, maintaining and improving a good flavor of the products, and continuously providing the good flavor of the products over a long period of time, and thus the role thereof can be said to be different from a role as a stabilizer in general refrigerated products, that is, a role of providing viscosity at a predetermined level in a liquid refrigerated product, stabilizing a phase of the product, and maintaining the phase of the product.

Accordingly, the present inventors have studied a method of supplementing pectin in fermented milk, and found that by using cellulose ether instead of pectin, phase stability is maintained using only a small amount compared to pectin and there is no distinguishing taste unlike sourness of pectin, and thus a fermented milk product maintaining an original flavor of fermented milk as it is can be obtained, thereby accomplishing the present invention.

[Disclosure]

[Technical Problem]

The present invention has been made in an effort to provide a fermented milk composition containing cellulose ether.

Further, the present invention has been made in an effort to provide a production method of a fermented milk composition by applying cellulose ether to fermented milk.

[Technical Solution]

An exemplary embodiment of the present invention provides a fermented milk composition securing phase stability, including: cellulose ether as a stabilizer for preventing a whey separation phenomenon.

It is preferable that cellulose ether be included in a content in a range of 0.05 to 1 wt% based on a total weight of the fermented milk composition.

Further, it is preferable that cellulose ether be hydroxyalkylalkyl cellulose having a structure where 19 to 30% of an alkyl group and 4 to 20% of a hydroxyalkyl group are substituted in a main chain of cellulose based on a weight, and it is more preferable that hydroxyalkylalkyl cellulose be hydroxypropylmethyl cellulose.

Another exemplary embodiment of the present invention provides a production method of fermented milk, including: manufacturing a fermented base; manufacturing a cellulose ether syrup; and adding the cellulose ether syrup to the fermented base to perform homogenization and cooling.

The manufacturing of the cellulose syrup includes mixing cellulose ether with sugar; dispersing cellulose ether mixed with sugar in hot water at high temperatures; and sterilizing and cooling the dispersed mixture.

Further, the manufacturing of the cellulose ether syrup includes dispersing cellulose ether in hot water at high temperatures; mixing dispersed cellulose ether with sugar; and sterilizing and cooling cellulose ether mixed with sugar.

According to the present invention, it is preferable that in the manufacturing of the cellulose ether syrup, an excipient or a flavoring agent be further included, it is preferable that the excipient be one kind or more selected from the group consisting of maltodextrin, polydextrose, inulin, an indigestible carbohydrate, a whey protein, a whey powder, casein, sodium caseinate, a milk protein, a whey separation protein, a chicory dietary fiber, a fiber sol, and a dietary fiber, and it is preferable that the flavoring agent be one kind or more selected from a fruit flavor, a fermented milk flavor, a cream flavor, a milk flavor, and the like.

[Advantageous Effects]

In a fermented milk composition of the present invention, it is possible to provide a fermented milk beverage securing stabilized phase stability and having reduced sourness by applying cellulose ether in a small amount instead of pectin as a stabilizer for preventing a whey separation phenomenon.

[Description of Drawings]

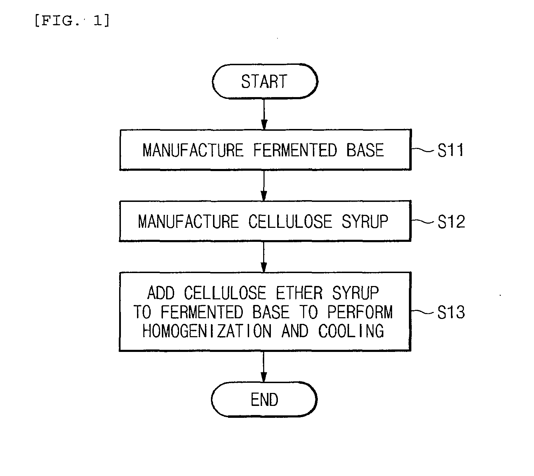

FIG. 1 is a flowchart illustrating a process of manufacturing fermented milk by applying cellulose ether according to an exemplary embodiment of the present invention.

[Best Mode]

Hereinafter, the present invention will be described in more detail.

The present invention provides a fermented milk composition securing phase stability, including cellulose ether as a stabilizer for preventing a whey separation phenomenon.

Cellulose ether may be used instead of pectin as the stabilizer for preventing the whey separation phenomenon to maintain phase stability by only a small amount, and cellulose ether has no distinct flavor, and thus an original flavor of fermented milk may be maintained as it is.

Further, it is preferable that cellulose ether be hydroxyalkylalkyl cellulose having a structure where 19 to 30% of an alkyl group and 4 to 20% of a hydroxyalkyl group are substituted in a main chain of cellulose based on a weight, and it is more preferable that hydroxyalkylalkyl cellulose be hydroxypropylmethyl cellulose. Methyl, ethyl, propyl, butyl, and the like may be selected as the alkyl group.

In the case where the degree of substitution of the alkyl group and the degree of substitution of the hydroxyalkyl group deviate from the aforementioned range, a function of hydroxyalkylalkyl cellulose as the stabilizer in fermented milk may not be appropriately shown.

In hydroxyalkylalkyl cellulose, a viscosity, which is measured at 20°C based on a 2% solution by using a Brookfield viscometer (digital viscometer Brookfield DV-II, USA.) is 400 to 100,000 cps.

In the fermented milk composition, a fermented base, sugar, cellulose ether, and purified water are included, and if necessary, an excipient, a flavoring agent, or the like may be included. The components may be each used in a content in a range generally used in the art.

The fermented base is manufactured by pre-heating pasteurized milk generally coming to the market to 55 to 65°C, adding a skimmed milk powder at a level of 1 to 10% based on a weight of pasteurized milk, inoculating strains, for example, lactic acid bacteria thereinto, and culturing the strains.

Meanwhile, cellulose ether is included in a content in the range of preferably 0.05 to 1 wt% and more preferably 0.1 to 0.3 wt% based on the total weight of the fermented milk composition. In the case where cellulose ether is included in a content of less than 0.05 wt%, cellulose ether inadequately serves as the stabilizer, and in the case where cellulose ether is used in a content of more than 1 wt%, a viscosity may be excessively increased to cause the texture of food that is different from that of fermented milk.

The excipient may be one kind or more selected from the group consisting of maltodextrin, polydextrose, inulin, an indigestible carbohydrate, a whey protein, a whey powder, casein, sodium caseinate, a milk protein, a whey separation protein, a chicory dietary fiber, a fiber sol, and a dietary fiber, the excipient may be used in a range generally used in this field, and it is preferable that the excipient be included in a content of 0 to 5 wt% based on the total weight of the fermented milk composition.

Further, the flavoring agent may be one kind or more selected from a fruit flavor, a fermented milk flavor, a cream flavor, a milk flavor, and the like. The flavoring agent may be used in a range generally used in this field, and it is preferable that the flavoring agent be included in a content of 0 to 1 wt% based on the total weight of the fermented milk composition.

The fermented milk composition may be divided into thick fermented milk (milk-solid-non-fat 8 wt% or more) and fermented milk (milk-solid-non-fat 3 wt% or more) according to the content of a milk-solid-non-fat (solid derived from milk except for a fat) of the fermented base.

FIG. 1 is a flowchart illustrating a process of manufacturing fermented milk by applying cellulose ether according to an exemplary embodiment of the present invention.

Referring to FIG. 1, the process of manufacturing fermented milk by applying cellulose ether according to the present invention includes a step of manufacturing the fermented base (S11); a step of manufacturing a cellulose ether syrup (S12); and a step of adding the cellulose ether syrup to the fermented base to perform homogenization and cooling (S13).

The step of manufacturing of the fermented base (S11) again includes a step of mixing pasteurized milk and a skimmed milk powder; a step of sterilizing and cooling the pasteurized milk and the skimmed milk powder; a step of inoculating and culturing a strain; and a step of pulverizing a curd.

That is, after pasteurized milk sold in the market is pre-heated to about 55 to 60°C, the skimmed milk powder is added at a level of 1 to 10% of the weight of pasteurized milk to perform mixing. Subsequently, sterilization is performed at 85 ± 5°C for 25 ± 5 minutes, followed by cooling to a level of 40 ± 2°C.

In the case of a commercially available strain (starter), the strain is inoculated in an amount recommended by an enterprise, and then cultured for about 6 to 8 hours.

As the inoculated strain, lactic acid bacteria such as *Streptococcus thermophilus, Lactobacillus delbrueckii subsp. Bulgaricus, Lactobacillus acidophilus, Lactobacillus delbrueckii subsp. Lactis, Bifidobacterium Lactis,* and *Lactobacillus plantum,* or various lactic acid bacteria commercially used to manufacture fermented milk may be selected.

For example, a ABT-5 mixed strain (Christian Hansen A/S) is a type where three strains (*Lactobacillus acidophilus LA-5, Bifidobacterium BB-12,* and *Streptococcus thermophillus*) are mixed in a freeze-drying form and a product individually packaged in 15 units (based on 150 kg), and since the strains may not be uniformly mixed, the ABT-5 mixed strain may be completely dissolved in 1 to 2 L of sterilized saline solution and only 45 to 55 mℓ thereof may be added to the fermented base to be cultured, or a method of completely pulverizing a freeze-dried granule-type powder to weigh an amount corresponding to 0.5 unit in a clean bench and thus adding the powder may be applied.

As another method, a plain-type thick fermented milk product sold in the market is purchased to be added at a weight ratio of 5 to 10% based on the fermented base.

When culturing is finished, the pH of the fermented base is 4.35 ± 0.05 and acidity is about 0.74 ± 0.05, and when fermentation is finished, an intrinsic flavor of fermented milk and a peculiar physical property of a curd where milk proteins are strongly agglomerated may be confirmed.

Subsequently, the strongly agglomerated curd is pulverized, and in this case, since the milk protein curd is hard but may be easily broken by only physically weak force, if the milk protein curd is agitated at several hundreds rpm for several minutes to several tens minutes by using an agitator, the milk protein curd may be easily broken.

The step of manufacturing of the cellulose ether syrup (S12) includes a step of mixing cellulose ether with sugar; a step of dispersing cellulose ether mixed with sugar in hot water at high temperatures; and a step of sterilizing and cooling the dispersed mixture.

Further, the step of manufacturing of the cellulose ether syrup (S12) includes a step of dispersing cellulose ether in hot water at high temperatures; a step of mixing dispersed cellulose ether with sugar; and a step of sterilizing and cooling cellulose ether mixed with sugar.

It is preferable that sugar be included in a content in the range of 5 to 10 wt% based on the total weight of fermented milk.

Further, in the step of manufacturing of the cellulose ether syrup, selectively, the excipient or the flavoring agent may be further included.

The excipient may be one kind or more selected from the group consisting of maltodextrin, polydextrose, inulin, an indigestible carbohydrate, a whey protein, a whey powder, casein, sodium caseinate, a milk protein, a whey separation protein, a chicory dietary fiber, a fiber sol, and a dietary fiber, the excipient may be used in a range generally used in this field, and it is preferable that the excipient be included in a content of 0 to 5 wt% based on the total weight of fermented milk.

Further, the flavoring agent may be one kind or more selected from a fruit flavor, a fermented milk flavor, a cream flavor, a milk flavor, and the like. The flavoring agent may be used in a range generally used in this field, and it is preferable that the flavoring agent be included in a content of 0 to 1 wt% based on the total weight of fermented milk.

Specifically reviewing the step (S12), after cellulose ether is weighed, hot water at 85°C or more and preferably 90 to 100°C is poured to perform dispersing. Cellulose ether is not dissolved in an aqueous solution at high temperatures but apt to be dispersed. Thereafter, if water at room temperature is added in a predetermined amount at a level of 3 to 5 times of the amount of hot water to be continuously agitated for about 1 hour or more, for example, 2 to 3 hours, cellulose ether is completely dissolved in water. Subsequently, sugar, and selectively, the excipient or the flavoring agent is added thereto to be well agitated, a temperature is increased to 85 ± 5°C to perform sterilization for 10 to 20 minutes, and cooling is then performed to a gel point or less, for example, about 37 to 42°C.

As another method, like the pectin syrup, after the cellulose ether powder and sugar are mixed and then added to hot water at 85°C or more and preferably 90 to 100°C to be well dispersed, water at room temperature is slowly added in an amount at a level of 3 to 5 times of the amount of hot water to be continuously agitated for about 1 hour or more, for example, 2 to 3 hours, thus completely dissolving the mixture. Subsequently, after the excipient, the flavoring agent, or the like is added to be agitated well, the temperature is increased to 85 ± 5°C to perform sterilization for 10 to 20 minutes, and cooling is performed to the gel point or less, for example, about 37 to 42°C.

Subsequently, the step of adding the cellulose ether syrup in the step (S12) to the fermented base in the step (S11) to perform homogenization and cooling (S13) is performed. Herein, it is preferable that the cellulose ether syrup be added so that cellulose ether is contained in a content in the range of 0.01 to 1 wt% based on the total weight of fermented milk in the fermented base.

Herein, homogenization is performed after the fermented base and the cellulose ether syrup are sufficiently mixed, and in order to disperse a fat globule, maintain a soft texture of food, emulsify cellulose ether, and show a function as the stabilizer, two-step homogenization may be generally used, and in this case, a homogenization pressure is appropriately at a level of 150 to 200 bar in the case of primary homogenization and 30 to 50 bar in the case of secondary homogenization. Products obtained by completing a homogenization process may be cooled to a level of 5 to 10°C to be charged in a vessel. Hereinafter, the present invention will be described in more detail with reference to Examples, but the present invention is not limited by the following Examples.

Examples 1 to 4

Production of thick fermented milk (milk-solid-non-fat 8 wt% or more) (based on total amount of 5 kg)

After pasteurized milk (Seoul milk) sold in the market was pre-heated to about 55°C, the skimmed milk powder was added in the content at the level of 4% based on the weight of milk to manufacture 4 kg of the pre-fermented base. After sterilization was performed for 25 minutes while the temperature was maintained at about 85°C, 0.5 unit of the ABT-5 mixed strain (Christian Hansen A/S) was inoculated into the milk solution and then cultured to manufacture the fermented base. The culturing temperature was 40°C, the culturing time was 7 hours, and when culturing was finished, the pH was 4.30 and acidity was 0.79 (based on lactic acid). When fermentation was finished, the intrinsic flavor of fermented milk and the peculiar physical property of the curd where the milk proteins were strongly agglomerated could be confirmed. The content of the milk-solid-non-fat (solid derived from milk except for the fat) of the fermented base was at the level of about 10.8 wt%.

After 7.5 g (Examples 1 to 3) and 10 g (Example 4) of hydroxypropylmethyl cellulose as cellulose ether were weighed, 100 g of hot water at 90°C was poured to perform dispersing. Water at room temperature was added in the content at the level of 4 times of the content of hot water, and continuously agitated for about 2 hours to completely dissolve hydroxypropylmethyl cellulose in water. Subsequently, the components described in Table 1 were added well to the cellulose ether solution manufactured by the aforementioned process and agitated to be completely dissolved, the temperature was increased to 85°C to perform sterilization for 15 minutes, and cooling was then performed to about 40°C.

The manufactured fermented base, which was obtained by completing fermentation, and cellulose ether syrup were mixed well. If the fermented base and the cellulose ether syrup were sufficiently mixed, the two-step homogenization process was performed. In this case, the homogenization pressure was at the level of 180 bar in primary homogenization and at the level of 40 bar in secondary homogenization. Thick fermented milk that was obtained by completing the homogenization process was cooled to the level of 5°C to be charged in the vessel.

Comparative Examples 1 to 5

In Comparative Example 1, the same procedure as Examples 1 to 3 was performed, except that cellulose ether was not used, and in Comparative Examples 2 to 5, the same procedure as Examples 1 to 3 was performed, except that pectin was used instead of cellulose ether.

[Table 1]

| Raw material (wt%) | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Fermented base | 80 | 80 | 80 | 80 | 80 | 80 | 80 | 80 | 80 |
| Sugar | 6 | 6 | 6 | 6 | 6 | 6 | 6 | 6 | 6 |
| Apple concentrated solution (70 brix) | 3.50 | 3.50 | 3.50 | 3.50 | 3.50 | 3.50 | 3.50 | 3.50 | 3.50 |
| Inulin | 0.00 | 0.15 | 0.00 | 0.00 | 0.00 | 0.00 | 0.00 | 0.00 | 0.00 |
| Maltodextrin | 0.00 | 0.00 | 0.15 | 1.50 | 0.00 | 0.00 | 0.00 | 0.00 | 0.00 |
| Polydextrose | 0.00 | 0.15 | 0.00 | 0.00 | 0.00 | 0.00 | 0.00 | 0.00 | 0.00 |
| Pectin (HM pectin) | 0.00 | 0.00 | 0.00 | 0.00 | 0.00 | 0.10 | 0.20 | 0.30 | 0.40 |
| HPMC | 0.15 | 0.15 | 0.15 | 0.20 | 0.00 | 0.00 | 0.00 | 0.00 | 0.00 |
| Purified water | 10.35 | 7.35 | 8.85 | 8.80 | 10.50 | 10.40 | 10.30 | 10.20 | 10.10 |
| Total | 100 | 100 | 100 | 100 | 100 | 100 | 100 | 100 | 100 |

HM (High methyl) pectin: YM-100H (HM pectin) manufactured by CP Kelco, Inc.
HPMC: HPMC (AnyAddy®) of Samsung Fine Chemicals Co., Ltd. manufactured by the method of Korean Patent Application Laid-Open No. 2010-0118800

Evaluation Example 1

The change in viscosity and the change in pH as time passed with respect to thick fermented milk manufactured in Examples 1 to 4 and Comparative Examples 1 to 5 were measured, and the results are compared to each other in the following Table 2 (based on storage for 2 weeks at 5°C). Herein, the viscosity was measured at 20°C by using the Brookfield viscometer (digital viscometer Brookfield DV-II, USA), and the pH was measured at 20°C by the pH meter.

[Table 2]

| | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Initial viscosity | 150 ± 6 | 165 ± 10 | 170 ± 5 | 205 ± 5 | 74 ± 5 | 114 ± 8 | 158 ± 5 | 203 ± 10 | 253 ± 10 |
| Viscosity after 15 days | 160 ± 10 | 185 ± 6 | 190 ± 10 | 225 ± 10 | 90 ± 5 | 135 ± 10 | 180 ± 5 | 220 ± 5 | 268 ± 5 |
| Initial pH | 4.28 | 4.26 | 4.26 | 4.25 | 4.28 | 4.25 | 4.24 | 4.22 | 4.20 |
| pH after 15 days | 4.06 | 4.05 | 4.03 | 4.03 | 4.06 | 4.05 | 4.03 | 4.01 | 4.01 |

EP 2 921 057 A1

As a result of observing the change in viscosity and pH for 15 days, it could be confirmed that in all of Comparative Examples 1 to 5 and Examples 1 to 4, change aspects from initial measured values were similar to each other. Generally, the aspect that the pH was reduced by about 0.15 to 0.2 and thus the viscosity is generally increase could be confirmed. This is caused by generation of the organic acid due to after-fermentation and the Comparative Examples and the Examples show the similar aspects, and thus it is judged that cellulose ether does not particularly affect proliferation of microorganisms.

Evaluation Example 2

The initial pH value and initial acidity with respect to thick fermented milk manufactured in Examples 1 to 4 and Comparative Examples 1 to 5 were each measured, sensory evaluation thereof was performed by the 5-point scale with respect to sourness and the viscosity with trained panels as targets, and the results are described in the following [0064] Table 3.

<Evaluation standard>

pH measurement: Measured at 20°C by the pH meter

Acidity measurement: Measured by the appropriate method regulated in the processing criterion and the component standard of livestock products. 10 mℓ of water not containing carbon dioxide gas was added to about 10 mℓ of the test sample and 0.5 mℓ of the phenolphthalein test solution was added to perform titration by the 0.1N sodium hydroxide solution until the red color was continued for 30 seconds.
0.1N sodium hydroxide 1 mℓ = 0.009 g lactic acid

$$\text{Acidity (lactic acid\%)} = ((a \times f \times 0.009)/(10 \times \text{specific gravity of test sample})) \times 100$$

a = Consumption amount of 0.1N sodium hydroxide solution (mℓ)
f = Titer of 0.1N sodium hydroxide solution

[Table 3]

| Sensory evaluation | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| Initial pH | 4.28 | 4.26 | 4.26 | 4.25 | 4.28 | 4.25 | 4.24 | 4.22 | 4.20 |
| Initial acidity | 0.71 | 0.72 | 0.73 | 0.73 | 0.73 | 0.75 | 0.78 | 0.79 | 0.80 |
| Sourness preference | 4.0 | 4.3 | 4.2 | 4.0 | 4.0 | 3.8 | 3.5 | 3.2 | 3.1 |
| Sourness strength | 3.5 | 3.3 | 3.2 | 3.2 | 3.5 | 3.6 | 3.8 | 4.0 | 4.1 |
| Viscosity preference | 3.5 | 4.0 | 4.0 | 3.8 | 3.3 | 3.7 | 4.0 | 3.6 | 3.6 |
| Viscosity strength | 3.5 | 3.8 | 3.8 | 4.0 | 3.5 | 3.8 | 4.0 | 4.5 | 4.8 |

Sourness preference: Higher score represents stronger sourness preferred by a consumer (5-point scale)
Sourness strength: Higher score represents stronger sourness (5-point scale)
Viscosity preference: Higher score represents stronger viscosity preferred by a consumer (5-point scale)
Viscosity strength: Higher score represents stronger viscosity (5-point scale)

As seen through Table 3, the initial pHs of thick fermented milks according to Examples 1 to 4 and thick fermented milks according to Comparative Examples 1 to 5 were each 4.28 ± 0.02, and initial acidities were at the level of 0.75 ± 0.04 and were almost the same as each other. In the case of Comparative Examples 2 to 5 to which pectin was added, it was exhibited a trend that sourness strength was increased as the amount of pectin was increased, the viscosity was apt to be increased as the amount of pectin was increased, and viscosity preference was apt to be increased as the viscosity was increased, but in the case where pectin was applied in the amount of 0.3 wt% or more, preference was not good. On the other hand, in the case of Examples 1 to 4 to which cellulose ether was added instead of pectin, since only the viscosity was increased without a predetermined taste, cellulose ether hardly affected a taste of products and partially increased the viscosity, and thus a reduction effect of sourness strength and an increase effect of preference could be confirmed.

Evaluation Example 3

The whey separation phenomenon as time passed (after 1 day, 5 days, 10 days, and 15 days) with respect to thick fermented milks manufactured in Examples 1 to 4 and Comparative Examples 1 to 5 was evaluated by the naked eyes under the refrigeration condition of 5°C, and the results are described in the following Table 4.

[Table 4]

| Elapsed day | Example 1 | Example 2 | Example 3 | Example 4 | Comparative Example 1 | Comparative Example 2 | Comparative Example 3 | Comparative Example 4 | Comparative Example 5 |
|---|---|---|---|---|---|---|---|---|---|
| 1 day | 0% | 0% | 0% | 0% | 0% | 0% | 0% | 0% | 0% |
| 5 days | 0% | 0% | 0% | 0% | 20% | 20% | 0% | 0% | 0% |
| 10 days | 0% | 0% | 0% | 0% | 22% | 22% | 10% | 0% | 0% |
| 15 days | 0% | 0% | 0% | 0% | 25% | 25% | 15% | 0% | 0% |

From the result of Table 4, it could be confirmed that through Comparative Examples 1 to 5, only when the content of pectin was 0.3 wt% or more, the whey separation phenomenon could be effectively suppressed. This is identical with a recommended amount of an enterprise. On the contrary, it could be confirmed that as shown in Example 1, in the case where cellulose ether was applied, the whey separation phenomenon could be effectively prevented even by the content at the level of 0.15 wt%, and as shown in Examples 2 to 4, cellulose ether did not affect phase stability even in the case where various kinds of dietary fibers which may be generally contained in thick fermented milk were applied as they were.

Examples 5 to 6

Production of fermented milk (milk-solid-non-fat 3 wt% or more) (based on total weight of 5 kg)

After pasteurized milk (Seoul milk) sold in the market was pre-heated to about 55°C, the skimmed milk powder was added in the content at the level of 4% based on the weight of milk to manufacture 2 kg of the pre-fermented base. After sterilization was performed for 25 minutes while the temperature was maintained at about 85°C, 0.5 unit of the ABT-5 mixed strain (Christian Hansen A/S) was inoculated into the milk solution and then cultured to manufacture the fermented base. The culturing temperature was 40°C, the culturing time was 7 hours, and when culturing was finished, the pH was 4.30 and acidity was 0.79 (based on lactic acid). When fermentation was finished, the intrinsic flavor of fermented milk and the peculiar physical property of the curd where the milk proteins were strongly agglomerated could be confirmed.

After 10 g of hydroxypropylmethyl cellulose as cellulose ether was weighed, 100 g of hot water at 90°C was poured to perform dispersing. Water at room temperature was added in the content at a level of 4 times of the content of hot water, and continuously agitated for about 2 hours to completely dissolve hydroxypropylmethyl cellulose in water. Subsequently, the components described in the following Table 5 were added to the cellulose ether solution manufactured by the aforementioned process and agitated well to be completely dissolved, the temperature was increased to 85°C to perform sterilization for 15 minutes, and cooling was then performed to about 40°C.

The manufactured fermented base obtained by completing fermentation and the cellulose ether syrup were mixed well. If the fermented base and the cellulose ether syrup were sufficiently mixed, the two-step homogenization process was performed. In this case, the homogenization pressure was at the level of 180 bar in primary homogenization and at the level of 40 bar in secondary homogenization. Thick fermented milk that was obtained by completing the homogenization process was cooled to the level of 5°C to be charged in the vessel.

Comparative Examples 6 to 9

In Comparative Example 6, the same procedure as Example 5 was performed, except that cellulose ether was not used, and in Comparative Examples 7 to 9, the same procedure as Example 5 was performed, except that pectin was used instead of cellulose ether.

[Table 5]

| Raw material (wt%) | Example 5 | Example 6 | Comparative Example 6 | Comparative Example 7 | Comparative Example 8 | Comparative Example 9 |
|---|---|---|---|---|---|---|
| Fermented base | 40 | 40 | 40 | 40 | 40 | 40 |
| Sugar | 6 | 6 | 6 | 6 | 6 | 6 |
| Apple concentrated solution (70 brix) | 3.50 | 3.50 | 3.50 | 3.50 | 3.50 | 3.50 |
| Inulin | 0.00 | 1.00 | 0.00 | 0.00 | 0.00 | 0.00 |
| Maltodextrin | 0.00 | 1.00 | 0.00 | 0.00 | 0.00 | 0.00 |
| Polydextrose | 0.00 | 0.15 | 0.00 | 0.00 | 0.00 | 0.00 |
| Pectin (HM pectin) | 0.00 | 0.00 | 0.00 | 0.20 | 0.30 | 0.40 |
| HPMC | 0.20 | 0.20 | 0.00 | 0.00 | 0.00 | 0.00 |

(continued)

| Raw material (wt%) | Example 5 | Example 6 | Comparative Example 6 | Comparative Example 7 | Comparative Example 8 | Comparative Example 9 |
|---|---|---|---|---|---|---|
| Purified water | 50.30 | 48.15 | 50.50 | 50.30 | 50.20 | 50.10 |
| Total | 100 | 100 | 100 | 100 | 100 | 100 |
| LM (Low methyl) pectin: YM-115L (LM pectin) manufactured by CP Kelco, Inc. HPMC: HPMC (AnyAddy®) of Samsung Fine Chemicals Co., Ltd. manufactured by the method of Korean Patent Application Laid-Open No. 2010-0118800 | | | | | | |

Evaluation Example 4

The change in viscosity and the change in pH as time passed with respect to fermented milks manufactured in Examples 5 and 6 and Comparative Examples 6 to 9 were measured, and the results are compared to each other in the following Table 6. Herein, the measurement methods of the viscosity and the pH were the same as those in Evaluation Example 1.

[Table 6]

| | Example 5 | Example 6 | Comparative Example 6 | Comparative Example 7 | Comparative Example 8 | Comparative Example 9 |
|---|---|---|---|---|---|---|
| Initial viscosity | $100 \pm 5$ | $120 \pm 8$ | $26 \pm 5$ | $18 \pm 8$ | $24 \pm 3$ | $37 \pm 4$ |
| Viscosity after 15 days | $110 \pm 8$ | $130 \pm 10$ | $30 \pm 5$ | $22 \pm 6$ | $30 \pm 5$ | $45 \pm 5$ |
| Initial pH | 4.27 | 4.26 | 4.27 | 4.22 | 4.20 | 4.18 |
| pH after 15 days | 4.07 | 4.07 | 4.05 | 4.03 | 4.03 | 4.01 |

As a result of observing the change in viscosity and pH for 15 days, it could be confirmed that in all of Comparative Examples 6 to 9 and Examples 5 and 6, change aspects from initial measured values were similar to each other. Generally, the aspect that the pH was reduced by about 0.15 to 0.2, and thus the viscosity generally increased could be confirmed. This is caused by generation of the organic acid due to after-fermentation, and it is judged that the Comparative Examples and the Examples show the similar aspect, and thus cellulose ether does not particularly affect proliferation of microorganisms.

Evaluation Example 5

The initial pH values and initial acidities with respect to fermented milks manufactured in Examples 5 and 6 and Comparative Examples 6 to 9 were each measured, sensory evaluation thereof was performed by the 5-point scale with respect to sourness and the viscosity, and the results are described in the following Table 7. The evaluation criterion is the same as that in Evaluation Example 2.

[Table 7]

| Sensory evaluation | Example 5 | Example 6 | Comparative Example 6 | Comparative Example 7 | Comparative Example 8 | Comparative Example 9 |
|---|---|---|---|---|---|---|
| Initial pH | 4.27 | 4.26 | 4.27 | 4.22 | 4.20 | 4.18 |
| Initial acidity | 0.41 | 0.40 | 0.41 | 0.39 | 0.38 | 0.37 |
| Sourness preference | 4.0 | 4.0 | 4.0 | 3.9 | 3.7 | 3.5 |

(continued)

| Sensory evaluation | Example 5 | Example 6 | Comparative Example 6 | Comparative Example 7 | Comparative Example 8 | Comparative Example 9 |
|---|---|---|---|---|---|---|
| Sourness strength | 3.0 | 3.0 | 3.0 | 3.3 | 3.5 | 3.6 |
| Viscosity preference | 3.5 | 4.0 | 2.0 | 3.0 | 3.5 | 4.0 |
| Viscosity strength | 4.0 | 4.5 | 1.5 | 2.2 | 3.0 | 3.5 |

As seen through Table 7, the initial pHs of fermented milks according to Examples 5 and 6 and fermented milks according to Comparative Examples 6 to 9 were 4.22 $\pm$ 0.05, and initial acidities were at the level of 0.38 $\pm$ 0.04 and were almost the same as each other. Like the experiment of thick fermented milk, sourness strength was increased as the content of pectin was increased, and preference was apt to be reduced due to a mismatch of fermented milk with sourness, but in the case of Examples 5 and 6 using cellulose ether, cellulose ether hardly affected sourness strength and sourness preference. Further, unlike thick fermented milk, in the case of fermented milk, the sense of lack of the texture of food and taste portions caused by the low viscosity is generally considered as a problem, and is significantly overcome.

Evaluation Example 6

The whey separation phenomenon as time passed (after 1 day, 5 days, 10 days, and 15 days) with respect to fermented milk manufactured in Examples 5 and 6 and Comparative Examples 6 to 9 was evaluated by the naked eyes under the refrigeration condition of 5°C, and the results are described in the following Table 8.

[Table 8]

| Elapsed day | Example 5 | Example 6 | Comparative Example 6 | Comparative Example 7 | Comparative Example 8 | Comparative Example 9 |
|---|---|---|---|---|---|---|
| 1 day | 0% | 0% | 0% | 0% | 0% | 0% |
| 5 days | 0% | 0% | 10% | 5% | 0% | 0% |
| 10 days | 0% | 0% | 15% | 10% | 5% | 0% |
| 15 days | 0% | 0% | 25% | 15% | 10% | 0% |

From the result of Table 8, it could be confirmed that through Comparative Examples 6 to 9, only when the content of pectin was 0.4 wt% or more, the whey separation phenomenon could be effectively suppressed. On the contrary, it could be confirmed that as shown in Example 5, in the case where cellulose ether was applied, whey separation could be effectively prevented by the content at the level of 0.20 wt%, and cellulose ether did not affect phase stability even in the case where various kinds of dietary fibers which may be generally contained in thick fermented milk were applied as they were.

**Claims**

1. A fermented milk composition securing phase stability, comprising:

   cellulose ether as a stabilizer for preventing a whey separation phenomenon.

2. The fermented milk composition of claim 1, wherein cellulose ether is included in a content in a range of 0.05 to 1 wt% based on a total weight of the fermented milk composition.

3. The fermented milk composition of claim 1, wherein cellulose ether is hydroxyalkylalkyl cellulose having a structure where 19 to 30% of an alkyl group and 4 to 20% of a hydroxyalkyl group are substituted in a main chain of cellulose based on a weight.

4.  The fermented milk composition of claim 3, wherein hydroxyalkylalkyl cellulose is hydroxypropylmethyl cellulose.

5.  A production method of fermented milk, comprising:

    manufacturing a fermented base;
    manufacturing a cellulose ether syrup; and
    adding the cellulose ether syrup to the fermented base to perform homogenization and cooling.

6.  The method of claim 5, wherein in the manufacturing of the cellulose ether syrup, an excipient or a flavoring agent is further included.

7.  The method of claim 6, wherein the excipient is one kind or more selected from the group consisting of maltodextrin, polydextrose, inulin, an indigestible carbohydrate, a whey protein, a whey powder, casein, sodium caseinate, a milk protein, a whey separation protein, a chicory dietary fiber, a fiber sol, and a dietary fiber, and the flavoring agent is one kind or more selected from the group consisting of a fruit flavor, a fermented milk flavor, a cream flavor, and a milk flavor.

[FIG. 1]

```
                    ┌─────────────┐
                    │    START    │
                    └──────┬──────┘
                           │
                           ▼
       ┌──────────────────────────────────┐
       │   MANUFACTURE FERMENTED BASE     │──── S11
       └──────────────────┬───────────────┘
                          │
                          ▼
       ┌──────────────────────────────────┐
       │   MANUFACTURE CELLULOSE SYRUP    │──── S12
       └──────────────────┬───────────────┘
                          │
                          ▼
       ┌──────────────────────────────────┐
       │     ADD CELLULOSE ETHER SYRUP    │
       │  TO FERMENTED BASE TO PERFORM    │──── S13
       │   HOMOGENIZATION AND COOLING     │
       └──────────────────┬───────────────┘
                          │
                          ▼
                   ┌─────────────┐
                   │     END     │
                   └─────────────┘
```

## INTERNATIONAL SEARCH REPORT

| International application No. |
| --- |
| **PCT/KR2013/006882** |

**A. CLASSIFICATION OF SUBJECT MATTER**

*A23C 9/13(2006.01)i, A23C 9/12(2006.01)i*

According to International Patent Classification (IPC) or to both national classification and IPC

**B. FIELDS SEARCHED**

Minimum documentation searched (classification system followed by classification symbols)
A23C 9/13; A23L 1/0534; A23C 11/10; A61K 31/35; C12P 17/18; A23C 9/12; A23L 2/38; A23L 3/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: cellulose ether, stabilizing agent, fermented milk, homogenization, cooling

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2008-0064960 A (FMC CORPORATION) 10 July 2008<br>See claims 9, 18, 19, 31 and 39; paragraphs <16>, <18>, <21>, <25> and <26>. | 1-4 |
| Y | | 5-7 |
| Y | KR 10-1995-0010401 B1 (OH, Cheon Geum et al.) 16 September 1995<br>See claim 1. | 5-7 |
| A | JP 07-079615 B2 (DAICEL CHEMICAL INDUSTRIES CO., LTD.) 30 August 1995<br>See claims 1, 2. | 1-7 |
| A | JP 05-030987 A (HOECHST AG) 09 February 1993<br>See abstract; claims 1-6. | 1-7 |
| A | JP 03462637 B2 (DAI ICHI KOGYO SEIYAKU CO LTD) 05 November 2003<br>See claims 1-3. | 1-7 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 21 NOVEMBER 2013 (21.11.2013) | **22 NOVEMBER 2013 (22.11.2013)** |

| Name and mailing address of the ISA/KR | Authorized officer |
| --- | --- |
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

EP 2 921 057 A1

INTERNATIONAL SEARCH REPORT
Information on patent family members

International application No.

**PCT/KR2013/006882**

| Patent document cited in search report | Publication date | Patent family member | Publication date |
|---|---|---|---|
| KR 10-2008-0064960 A | 10/07/2008 | CA 2624115 A1 | 12/04/2007 |
| | | EP 1928264 A2 | 11/06/2008 |
| | | EP 1928264 B1 | 02/05/2012 |
| | | JP 2010-505004 A | 18/02/2010 |
| | | US 2007-0128333 A1 | 07/06/2007 |
| | | US 2011-0143009 A1 | 16/06/2011 |
| | | US 7879382 B2 | 01/02/2011 |
| | | WO 2007-041395 A2 | 12/04/2007 |
| KR 10-1995-0010401 B1 | 16/09/1995 | NONE | |
| JP 7079615 B2 | 30/08/1995 | NONE | |
| JP 05-030987 A | 09/02/1993 | AU 648369 B2 | 21/04/1994 |
| | | AU 8989991 A | 25/06/1992 |
| | | CA 2057760 A1 | 22/06/1992 |
| | | EP 0493761 A1 | 08/07/1992 |
| | | EP 0493761 B1 | 22/05/1996 |
| JP 3462637 B2 | 05/11/2003 | JP 08-280366 A | 29/10/1996 |

Form PCT/ISA/210 (patent family annex) (July 2009)

20

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4427701 A
- US 5605712 A

- KR 20100118800

**Non-patent literature cited in the description**

- **R. HANS TROMP et al.** *Food Hydrocollids,* 2004, vol. 18, 565-572